# EUROPEAN PATENT SPECIFICATION

(11) **EP 2 647 880 B1**
(45) Date of publication and mention of the grant of the patent: **18.03.2015**
(21) Application number: 13162401.7
(22) Date of filing: 04.04.2013
(51) Int. Cl.: F16H 57/04

(54) **Lubrication management system for a rotating shaft assembly and method of forming**
Schmierungsmanagementsystem für eine Drehwellenanordnung und Herstellungsverfahren
Système de gestion de lubrification pour ensemble d'arbre rotatif et procédé de formation

(30) Priority: 06.04.2012 US 201213441174
(43) Date of publication of application: 09.10.2013
(73) Proprietor: Hamilton Sundstrand Corporation, Windsor Locks, CT 06096-1010 (US)
(72) Inventor: Trommer, William C., Byron, IL Illinois 61010 (US); Blewett, Michael R., Stillman Valley, IL Illinois 61084 (US); Slayter, Matthew, Rockford, IL Illinois 61114 (US)
(74) Representative: Leckey, David Herbert

(56) References cited:
- WO-A1-2011/142235
- US-A- 2 645 305

## Description

### BACKGROUND OF THE INVENTION

The present invention relates to rotating shaft assemblies, and more particularly to a lubrication management system for such shaft assemblies, as well as a method for forming the lubrication management system, according to the preamble of claims 1, 11 and as they are disclosed in WO2011142235A.

Various systems comprising rotating components often include a shaft to which the rotating components are mounted or operably connected to. The shaft typically requires lubrication proximate an outer surface to ensure intended functionality of the overall system. Often, a shaft seal is not feasible and even in configurations where feasible, such seals have an inherently slight weepage. Therefore, lubrication outside of the intended contained area occurs and may undesirably interact with components of the system that function properly when kept clean of lubrication. In order to keep the components free of lubrication, a slinger is commonly installed on the shaft to centrifugally move the lubricant away from the shaft. The slinger must be retained and this is typically achieved with a separate and additional locking component. Multiple components pose installation issues and increase part count, as well as enhance the footprint on the shaft.

### BRIEF DESCRIPTION OF THE INVENTION

According to one embodiment, a lubrication management system for a rotating shaft assembly includes a shaft rotatable about a central axis and in operable connection with at least one component, wherein lubrication is supplied proximate an outer diameter of the shaft. Also included is a lubrication manipulation device for directing the lubrication radially away from the outer diameter of the shaft, wherein the lubrication manipulation device comprises a threaded portion for fixedly securing the lubrication manipulation device to the outer diameter of the shaft.

According to another embodiment, a method of forming a lubrication management system for a rotating shaft assembly is provided. The method includes operably connecting at least one component to a shaft rotatable about a central axis. Also included is fixedly securing a lubrication manipulation device to the shaft by threading the lubrication manipulation device onto an outer diameter of the shaft, wherein the lubrication manipulation device is configured to direct lubrication supplied to the outer diameter of the shaft radially away from the shaft.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a side, cross-sectional view of a rotating shaft assembly having a lubrication management system;
FIG. 2 is a perspective view of a lubrication manipulation device of the lubrication management system;
FIG. 3 is a plan view of the lubrication manipulation device of the lubrication management system;
FIG. 4 is a cross-sectional view of the lubrication manipulation device taken along line IV-IV of FIG. 3; and
FIG. 5 is a flow diagram illustrating a method of forming the lubrication management system.

### DETAILED DESCRIPTION OF THE INVENTION

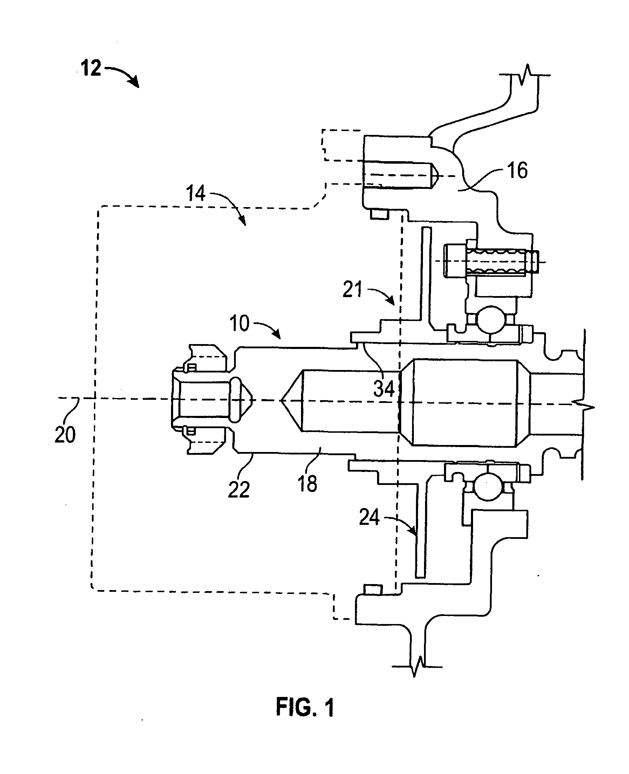

Referring to FIG. 1, a rotating shaft assembly is generally represented with reference numeral 10 and is disposed within a system 12 that requires at least one component 14 that rotates within a system housing 16. The system 12 may be of various types, such as an electrical, mechanical, or electromechanical system. The at least one component 14 may include a variety of components typically disposed within an application, such as the system 12 described above. Specifically, the at least one component 14 includes, but is not limited to, permanent magnet alternators (PMAs), brakes, and clutches, for example. These examples are merely illustrative and is not an exhaustive list of components that the at least one component 14 comprises. Irrespective of the particular component, it is often desirable to prevent lubrication or fluid from contacting or interacting with the at least one component 14.

The rotating shaft assembly 10 includes a shaft 18 that is rotatable about a central axis 20 and is in operable connection with, or in close proximity to, the at least one component 14. To enhance functionality, efficiency and service life of the system 12, a lubrication management system 21 having lubrication is supplied to various regions of the rotating shaft assembly 10, such as an outer diameter 22 of the shaft 18. The lubrication may be supplied from a lubrication supply circuit (not illustrated) that provides lubrication to the rotating shaft assembly 10, collects lubrication subsequent to interaction with the rotating shaft assembly 10 and recirculates the collected lubrication to provide lubrication once again to the rotating shaft assembly 10, thereby completing a lubrication recirculation process.

To prevent interaction of lubrication with the at least one component 14, a lubrication manipulation device 24, commonly referred to as a "slinger," is fixedly secured to the shaft 18. The lubrication manipulation device 24 is disposed radially outward from the shaft 18 and in fitting engagement with the outer diameter 22 of the shaft 18. The lubrication manipulation device 24 functions to direct lubricant from regions proximate the outer diameter 22 of the shaft 18 radially outward and away from the shaft 18, such that the lubrication does not seep or flow to the at least one component 14 that is sensitive to lubricant, as discussed above. Specifically, as the shaft 18 is rotating, the lubrication manipulation device 24 is configured to rotate in a way that generates a centrifugal force sufficient to throw the lubrication radially outward through a plurality of capillaries (not illustrated) of the lubrication manipulation device 24. It is to be appreciated that the lubrication merely need be directed outward and away from the rotating shaft assembly 10, and the term radially is not intended to limit the direction of lubricant throwing to that of a 90° angle (i.e., perfectly perpendicular) from the rotating shaft assembly 10, and more particularly from the shaft 18.

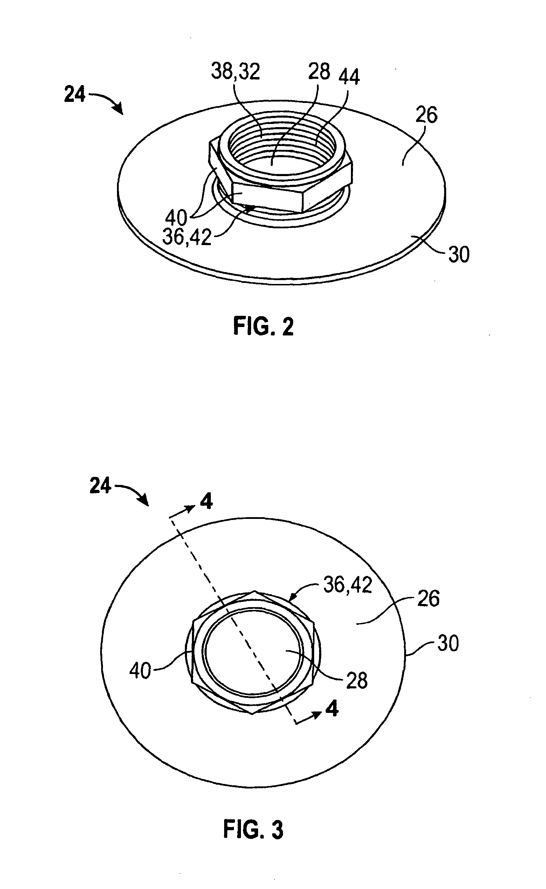

Referring now to FIGS. 2-4, the lubrication manipulation device 24 is illustrated in greater detail. As described above, the lubrication manipulation device 24 is fixedly secured to the outer diameter 22 of the shaft 18. In an exemplary embodiment, the lubrication manipulation device 24 includes a relatively planar base portion 26 that is illustrated as having a cylindrical geometry, however, it is contemplated that other geometric configurations may be employed to achieve the intended function. The relatively planar base portion 26 extends radially outward from a centrally located aperture 28 that is dimensioned to closely engage the outer diameter 22 of the shaft 18 to an outer surface 30. Lubricant is directed radially outward in response to centrifugal forces generated during rotation of the lubrication manipulation device 24. Specifically, the lubricant moves radially outward along a smooth plane of the lubrication manipulation device 24 due to the centrifugal forces exerted on the lubricant. Along the centrally located aperture 28 is a threaded portion 32 that is configured to engage a threaded region 34 (FIG. 1) of the outer diameter 22 of the shaft 18. Upon engagement with the shaft 18, the relatively planar base portion 26 of the lubrication manipulation device 24 is oriented in an axial plane along the shaft 18.

Extending axially from the relatively planar base portion 26 is a torque element 36 that is integrally formed with the relatively planar base portion 26, such that the lubrication manipulation device 24 comprises a single device configured to direct lubrication away from the shaft 18. The torque element 36 extends axially from the relatively planar base portion 26 and includes a threaded aperture 38 that is aligned with the centrally located aperture 28, such that the lubrication manipulation device 24 may be securely engaged with the shaft 18 by threading to the threaded region 34. Such an arrangement ensures adequate retention in the axial direction, as well as radially and circumferentially. To enhance the fixed securement of the lubrication manipulation device 24 to the shaft 18, the torque element 36 includes a plurality of surfaces 40 that form a nut 42 which may be engaged with a variety of tools to assist with a final torque application to the lubrication manipulation device 24.

During the secure engagement of the lubrication manipulation device 24 to the shaft 18, a locking element 44 self-retains the lubrication manipulation device 24 to the shaft 18 for adequate locking thereon. The locking element 44 is integrally formed with the lubrication manipulation device 24 and is configured to interact with the threaded relationship between the threaded portion 32 and the threaded region 34 during torqueing of the lubrication manipulation device 24 to the shaft 18. The locking element 44 may comprise a lock ring, a locking pellet, a deformed thread, etc., for example. It is to be appreciated that the examples listed above are merely illustrative and any suitable locking element may be employed to form adequate locking with the shaft 18.

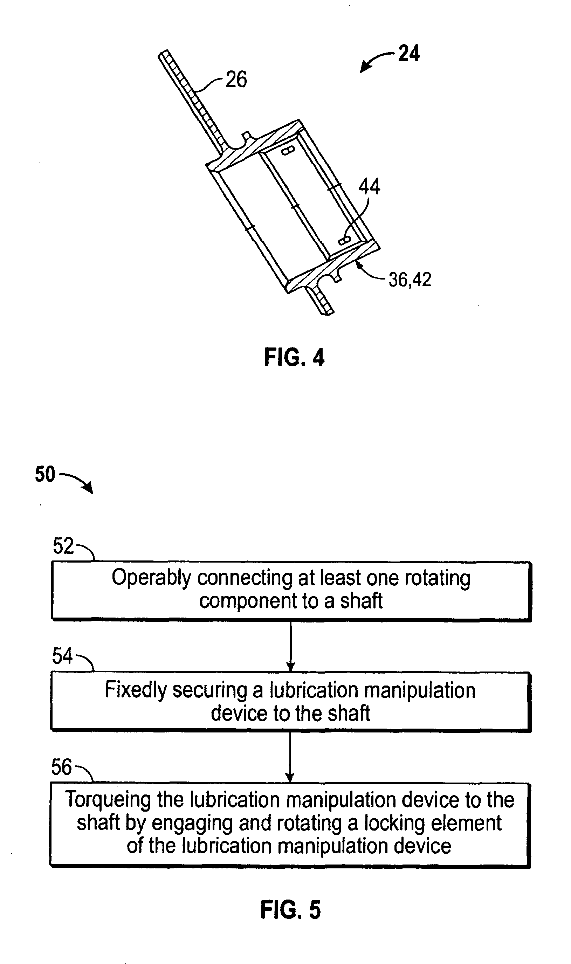

Referring now to FIG. 5, a method of forming 50 the lubrication management system 21 is also provided. The lubrication management system 21, as well as the rotating shaft assembly 10, have been previously described and specific structural components need not be described in further detail. The method of forming 50 includes operably connecting 52 the at least one component 14 to the shaft 18 and fixedly securing 54 the lubrication manipulation device 24 to the shaft 18. The lubrication manipulation device 24 may be fixedly secured to the shaft 18, and more specifically the outer diameter 22 of the shaft 18, by threading onto the threaded region 34 of the shaft 18. To ensure adequate locking and a fixed securement of the lubrication manipulation device 24 to the shaft 18, the method of forming 50 further includes torqueing 56 the lubrication manipulation device 24 by engaging and rotating the torque element 36. Additionally, the locking element 44 ensures retention of the lubrication manipulation device 24 to the shaft and prevents displacement of the lubrication manipulation device 24 in all directions, namely axial, radial, and circumferential, with respect to the central axis 20 of the system 12.

## Claims

1. A lubrication management system for a rotating shaft assembly (10) comprising:
a shaft (18) rotatable about a central axis (20) and in operable connection with at least one component (14), wherein lubrication is supplied proximate an outer diameter (22) of the shaft (18); and **characterized in that** it further comprises
a lubrication manipulation device (24) directing lubrication radially away from the outer diameter (22) of the shaft (18), wherein the lubrication manipulation device (24) comprises a threaded portion (32) fixedly securing the lubrication manipulation device (24) to the outer diameter (22) of the shaft (18).

2. The lubrication management system of claim 1, wherein the lubrication manipulation device (24) comprises a centrally located aperture (28) dimensioned to closely engage the outer diameter (22) of the shaft (18).

3. The lubrication management system of claim 2, wherein the threaded portion (32) of the lubrication manipulation device (24) is disposed proximate the centrally located aperture (28).

4. The lubrication management system of any preceding claim, wherein the lubrication manipulation device (24) comprises a relatively planar base (26) oriented in an axial plane along the shaft (18).

5. The lubrication management system of claim 4, wherein the relatively planar base (26) is cylindrical.

6. The lubrication management system of claim 4 or 5, further comprising a torque element (36) integrally formed with the lubrication manipulation device (24), wherein the locking element extends axially from the relatively planar base (26).

7. The lubrication management system of claim 6, wherein the locking element comprises a threaded aperture (38) aligned with the centrally located aperture (28) of the lubrication manipulation device (24).

8. The lubrication management system of claim 7, wherein the locking element further comprises a plurality of surfaces (40) forming a nut (42) for torqueing of the lubrication manipulation device (24) to the shaft (18).

9. The lubrication management system of any preceding claim, wherein the at least one component (14) comprises at least one of a permanent magnet alternator, a clutch and a brake.

10. The lubrication management system of any preceding claim, further comprising a locking element (44) integrally formed with the lubrication manipulation device (24), wherein the locking element (44) is disposed proximate the threaded portion (32).

11. A method of forming a lubrication management system for a rotating shaft assembly (10) comprising:
operably connecting at least one component to a shaft (18) rotatable about a central axis (20); and **characterized by**
fixedly securing a lubrication manipulation device (24) to the shaft (18) by threading the lubrication manipulation device (24) onto an outer diameter (22) of the shaft (18), wherein the lubrication manipulation device (24) is configured to direct lubrication supplied to the outer diameter (22) of the shaft (18) radially away from the shaft (18).

12. The method of claim 11, wherein the lubrication manipulation device (24) comprises a relatively planar base (26) oriented along an axial plane of the shaft (18).

13. The method of claim 11 or 12, wherein the lubrication manipulation device further comprises a torque element (36) integrally formed with, and extending axially away from, a or the relatively planar base (26).

14. The method of claim 13, wherein the torque element (36) comprises a plurality of surfaces (40) to form a nut (42).

15. The method of claim 14, further comprising torqueing the lubrication manipulation device (24) to the shaft (18) by rotating the nut (42).

## Patentansprüche

1. Schmiermittelverwaltungssystem für eine Drehwellenbaugruppe (10), umfassend:
eine Welle (18), die um eine Mittelachse (20) drehbar ist und in wirksamer Verbindung mit wenigstens einem Bauteil (14) steht, wobei das Schmiermittel in der Nähe eines Außendurchmessers (22) der Welle (18) bereitgestellt wird; und **dadurch gekennzeichnet, dass** es ferner Folgendes umfasst:
eine Schmiermittelbeeinflussungsvorrichtung (24), die Schmiermittel radial vom Außendurchmesser (22) der Welle (18) fort lenkt, wobei die Schmiermittelbeeinflussungsvorrichtung (24) einen Gewindeabschnitt (32) umfasst, der die Schmiermittelbeeinflussungsvorrichtung (24) fest am Außendurchmesser (22) der Welle (18) sichert.

2. Schmiermittelverwaltungssystem nach Anspruch 1, wobei die Schmiermittelbeeinflussungsvorrichtung (24) eine zentral angeordnete Öffnung (28) umfasst, die dazu abgemessen ist, in engem Eingriff mit dem Außendurchmesser (22) der Welle (18) zu stehen.

3. Schmiermittelverwaltungssystem nach Anspruch 2, wobei der Gewindeabschnitt (32) der Schmiermittelbeeinflussungsvorrichtung (24) in der Nähe der zentral angeordneten Öffnung (28) angeordnet ist.

4. Schmiermittelverwaltungssystem nach einem der vorangehenden Ansprüche, wobei die Schmiermittelbeeinflussungsvorrichtung (24) eine relativ planare Basis (26) umfasst, die in einer axialen Ebene um die Welle (18) ausgerichtet ist.

5. Schmiermittelverwaltungssystem nach Anspruch 4, wobei die relativ planare Basis (26) zylindrisch ist.

6. Schmiermittelverwaltungssystem nach Anspruch 4 oder 5, ferner umfassend ein Anzugselement (36), das einstückig mit der Schmiermittelbeeinflussungsvorrichtung (24) gebildet ist, wobei sich das Verriegelungselement axial von der relativ planaren Basis (26) erstreckt.

7. Schmiermittelverwaltungssystem nach Anspruch 6, wobei das Verriegelungselement eine Gewindeöffnung (38) umfasst, die an der zentral angeordneten Öffnung (28) der Schmiermittelbeeinflussungsvorrichtung (24) ausgerichtet ist.

8. Schmiermittelverwaltungssystem nach Anspruch 7, wobei das Verriegelungselement ferner eine Mehrzahl von Oberflächen (40) umfasst, die eine Mutter (42) zum Anziehen der Schmiermittelbeeinflussungsvorrichtung (24) an der Welle (18) bilden.

9. Schmiermittelverwaltungssystem nach einem der vorangehenden Ansprüche, wobei das wenigstens eine Bauteil (14) wenigstens eins von einem Dauermagnetgenerator, einer Kupplung und einer Bremse umfasst.

10. Schmiermittelverwaltungssystem nach einem der vorangehenden Ansprüche, ferner umfassend ein Verriegelungselement (44), das einstückig mit der Schmiermittelbeeinflussungsvorrichtung (24) gebildet ist, wobei das Verriegelungselement (44) benachbart zum Gewindeabschnitt (32) angeordnet ist.

11. Verfahren zum Bilden eines Schmiermittelverwaltungssystems für eine Drehwellenanordnung (10), umfassend:
wirksames Verbinden von wenigstens einem Bauteil mit einer Welle (18), die um eine Drehachse (20) drehbar ist; und **gekennzeichnet durch**
festes Sichern einer Schmiermittelbeeinflussungsvorrichtung (24) an der Welle (18) durch Schrauben der Schmiermittelbeeinflussungsvorrichtung (24) auf einen Außendurchmesser (22) der Welle (18), wobei die Schmiermittelbeeinflussungsvorrichtung (24) dazu konfiguriert wird, Schmiermittel, das an den Außendurchmesser (22) der Welle (18) bereitgestellt wird, radial von der Welle (18) fort zu lenken.

12. Verfahren nach Anspruch 11, wobei die Schmiermittelbeeinflussungsvorrichtung (24) eine relativ planare Basis (26) umfasst, die an einer axialen Ebene der Welle (18) ausgerichtet ist.

13. Verfahren nach Anspruch 11 oder 12, wobei die Schmiermittelbeeinflussungsvorrichtung ferner ein Anzugselement (36) umfasst, das einstückig mit einer oder der relativ planaren Basis (26) gebildet ist und sich axial von dieser fort erstreckt.

14. Verfahren nach Anspruch 13, wobei das Anzugselement (36) eine Mehrzahl von Flächen (40) zum Bilden einer Mutter (42) umfasst.

15. Verfahren nach Anspruch 14, ferner umfassend Anziehen der Schmiermittelbeeinflussungsvorrichtung (24) an der Welle (18) durch Drehen der Mutter (42).

## Revendications

1. Système de gestion de lubrification destiné à un ensemble rotatif formant un arbre (10), comprenant :
un arbre (18) qui peut tourner autour d'un axe central (20) et en liaison de fonctionnement avec au moins un composant (14), la lubrification étant apportée par un diamètre extérieur (22) de l'arbre (18) ; et **caractérisé en ce qu'**il comprend en outre
un dispositif de manipulation de lubrification (24) dirigeant la lubrification radialement à l'écart du diamètre extérieur (22) de l'arbre (18), le dispositif de manipulation de lubrification (24) comprenant une partie filetée (32) attachant de manière fixe le dispositif de manipulation de lubrification (24) au diamètre extérieur (22) de l'arbre (18).

2. Système de gestion de lubrification selon la revendication 1, dans lequel le dispositif de manipulation de lubrification (24) comprend une ouverture située au centre (28), dimensionnée pour recevoir de manière ajustée le diamètre extérieur (22) de l'arbre (18).

3. Système de gestion de lubrification selon la revendication 2, dans lequel la partie filetée (32) du dispositif de manipulation de lubrification (24) est disposée à proximité de l'ouverture située au centre (28).

4. Système de gestion de lubrification selon l'une quelconque des revendications précédentes, dans lequel le dispositif de manipulation de lubrification (24) comprend une base relativement plane (26) orientée dans un plan axial le long de l'arbre (18).

5. Système de gestion de lubrification selon la revendication 4, dans lequel la base relativement plane (26) est cylindrique.

6. Système de gestion de lubrification selon la revendication 4 ou 5, comprenant en outre un élément de couple (36) formé avec intégration avec le dispositif de manipulation de lubrification (24), dans lequel l'élément de verrouillage s'étend axialement à partir de la base relativement plane (26).

7. Système de gestion de lubrification selon la revendication 6, dans lequel l'élément de verrouillage comprend une ouverture filetée (38) alignée avec l'ouverture située au centre (28) du dispositif de manipulation de lubrification (24).

8. Système de gestion de lubrification selon la revendication 7, dans lequel l'élément de verrouillage comprend en outre un ensemble de surfaces (40) formant un écrou (42) pour établissement du couple du dispositif de manipulation de lubrification (24) par rapport à l'arbre (18).

9. Système de gestion de lubrification selon l'une quelconque des revendications précédentes, dans lequel le composant au nombre d'au moins un (14) comprend au moins un alternateur à aimant permanent, un embrayage et un frein.

10. Système de gestion de lubrification selon l'une quelconque des revendications précédentes, comprenant en outre un élément de verrouillage (44) formé avec intégration avec le dispositif de manipulation de lubrification (24), l'élément de verrouillage (44) étant disposé à proximité de la partie filetée (32).

11. Procédé de formation d'un système de gestion de la lubrification pour un ensemble rotatif formant un arbre (10), comprenant :
la liaison en fonctionnement d'au moins un composant à un arbre (18) pouvant tourner autour d'un axe central (20) ; et **caractérisé par**
la fixation solide d'un dispositif de manipulation de lubrification (24) à l'arbre (18) par vissage du dispositif de manipulation de lubrification (24) sur un diamètre extérieur (22) de l'arbre (18), le dispositif de manipulation de lubrification (24) étant conçu pour diriger la lubrification vers le diamètre extérieur (22) de l'arbre (18) radialement à l'écart de l'arbre (18).

12. Procédé selon la revendication 11, dans lequel le dispositif de manipulation de lubrification (24) comprend une base relativement plane (26) orientée le long d'un plan axial de l'arbre (18).

13. Procédé selon la revendication 11 ou 12, dans lequel le dispositif de manipulation de lubrification comprend un élément de couple (36) formé avec intégration avec une base relativement plane (26) ou avec la base relativement plane (26), et s'étendant axialement à l'écart de celle-ci.

14. Procédé selon la revendication 13, dans lequel l'élément de couple (36) comprend une pluralité de surfaces (40) pour donner un écrou (42).

15. Procédé selon la revendication 14, comprenant en outre l'établissement du couple du dispositif de manipulation de lubrification (24) par rapport à l'arbre (18), par rotation de l'écrou (42).
